(19)

Europäisches
Patentamt
European
Patent Office
Office européen
des brevets

(11) EP 4 343 910 A1

(12) EUROPEAN PATENT APPLICATION
published in accordance with Art. 153(4) EPC

(43) Date of publication:
27.03.2024 Bulletin 2024/13

(21) Application number: 22842062.6

(22) Date of filing: 11.07.2022

(51) International Patent Classification (IPC):
H01M 10/052 $^{(2010.01)}$  H01G 11/24 $^{(2013.01)}$
H01G 11/26 $^{(2013.01)}$  H01G 11/42 $^{(2013.01)}$
H01M 4/133 $^{(2010.01)}$  H01M 4/587 $^{(2010.01)}$

(52) Cooperative Patent Classification (CPC):
H01G 11/24; H01G 11/26; H01G 11/42;
H01M 4/133; H01M 4/587; H01M 10/052;
Y02E 60/10

(86) International application number:
PCT/JP2022/027179

(87) International publication number:
WO 2023/286718 (19.01.2023 Gazette 2023/03)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 12.07.2021 JP 2021115281

(71) Applicant: GS Yuasa International Ltd.
Kisshoin, Minami-ku,
Kyoto-shi, Kyoto 601-8520 (JP)

(72) Inventors:
• OYAMA Jun
  Kyoto-shi, Kyoto 601-8520 (JP)

• NAKAI Kenta
  Kyoto-shi, Kyoto 601-8520 (JP)
• KANEKO Takashi
  Kyoto-shi, Kyoto 601-8520 (JP)
• UEHIRA Kenta
  Kyoto-shi, Kyoto 601-8520 (JP)
• KAKO Tomonori
  Kyoto-shi, Kyoto 601-8520 (JP)
• YAMAKAWA Yuto
  Kyoto-shi, Kyoto 601-8520 (JP)
• SEKIGUCHI Taisei
  Kyoto-shi, Kyoto 601-8520 (JP)

(74) Representative: Isarpatent
Patent- und Rechtsanwälte
Barth Hassa Peckmann & Partner mbB
Friedrichstraße 31
80801 München (DE)

(54) POWER STORAGE ELEMENT

(57) An energy storage device according to one aspect of the present invention includes: a negative electrode including a negative active material layer; and a nonaqueous electrolyte. The negative active material layer contains a negative active material. The negative active material contains natural graphite particles. The natural graphite particles have an internal porosity of 2% or less. A state of charge of the negative active material in a charged state is 0.6 or less.

Fig. 1

**Description**

TECHNICAL FIELD

The present invention relates to an energy storage device.

BACKGROUND ART

Nonaqueous electrolyte secondary batteries typified by lithium ion secondary batteries are often used for electronic devices such as personal computers and communication terminals, motor vehicles, and the like since, because the batteries are high in energy density. Also, capacitors such as lithium ion capacitors and electric double-layer capacitors, energy storage devices with electrolytes other than nonaqueous electrolyte used, and the like are also widely used as energy storage devices other than nonaqueous electrolyte secondary batteries.

For purposes such as improving the energy density of the energy storage device, a carbon material such as graphite has been used as the negative active material of the energy storage device (see Patent Document 1).

PRIOR ART DOCUMENT

PATENT DOCUMENT

Patent Document 1: JP-A-2005-222933

SUMMARY OF THE INVENTION

PROBLEMS TO BE SOLVED BY THE INVENTION

However, when the state of charge of the negative active material is increased in the energy storage device for high-power applications using the carbon material as the negative active material, a capacity retention ratio after a charge-discharge cycle at a large current may be significantly lowered.

An object of the present invention is to provide an energy storage device having a high energy density and capable of suppressing a decrease in a capacity retention ratio after a charge-discharge cycle at a large current.

MEANS FOR SOLVING THE PROBLEMS

An energy storage device according to one aspect of the present invention includes: a negative electrode including a negative active material layer; and a nonaqueous electrolyte. The negative active material layer contains a negative active material. The negative active material contains natural graphite particles. The natural graphite particles have an internal porosity of 2% or less. A state of charge of the negative active material in a charged state is 0.6 or less.

ADVANTAGES OF THE INVENTION

According to one aspect of the present invention, it is possible to provide an energy storage device having a high energy density and capable of suppressing a decrease in a capacity retention ratio after a charge-discharge cycle at a large current.

BRIEF DESCRIPTION OF THE DRAWINGS

Fig. 1 is a see-through perspective view illustrating an embodiment of an energy storage device.
Fig. 2 is a schematic diagram illustrating an embodiment of an energy storage apparatus including a plurality of the energy storage devices assembled.

MODE FOR CARRYING OUT THE INVENTION

As will be appreciated from the following description and examples, matters disclosed herein include the following.

[1]: An energy storage device including:

a negative electrode including a negative active material layer; and
a nonaqueous electrolyte, wherein
the negative active material layer contains a negative active material,
the negative active material contains natural graphite particles,
the natural graphite particles have an internal porosity of 2% or less, and
a state of charge of the negative active material in a charged state is 0.6 or less.

[2]: The energy storage device according to the above [1], wherein the negative active material layer has a porosity of 40% or more.

[3]: The energy storage device according to the above [1] or [2], wherein the energy storage device is used for a power source for a hybrid vehicle and a plug-in hybrid vehicle.

[4]: The energy storage device according to any one of the above [1] to [3], wherein the state of charge of the negative active material in the charged state is 0.45 or more.

[5]: The energy storage device according to any one of [1] to [4], wherein the natural graphite particles have an average particle size of 7 pm or more.

[6]: The energy storage device according to any one of [1] to [5], wherein the natural graphite particles have a BET specific surface area of 4.5 $m^2/g$ or less.

First, an outline of an energy storage device disclosed in the present specification will be described.

An energy storage device according to one aspect of the present invention includes: a negative electrode including a negative active material layer; and a nonaqueous electrolyte. The negative active material layer contains a negative active material. The negative active material contains natural graphite particles. The natural graphite particles have an internal porosity of 2% or less. A state of charge of the negative active material in a charged state is 0.6 or less.

The energy storage device according to one aspect of the present invention has a high energy density and is capable of suppressing a decrease in a capacity retention ratio after a charge-discharge cycle at a large current. Although the reason therefor is not clear, the following reason is presumed. In general, in an energy storage device in which natural graphite particles are used as a negative active material, when the negative active material is used with a large state of charge for increasing an energy density, expansion and shrinkage associated with charge-discharge of the negative active material increase, so that a side reaction with a nonaqueous electrolyte easily occurs. In particular, when the state of charge of the negative active material is increased and a charge-discharge cycle is performed at a large current, a side reaction with the nonaqueous electrolyte becomes remarkable, and a decrease in a capacity retention ratio increases. Meanwhile, in the energy storage device, it is presumed that since the natural graphite particles having an internal porosity of 2% or less are used as the negative active material, the volume change of the negative active material during charge-discharge is reduced, and the side reaction with the nonaqueous electrolyte can be reduced, so that the decrease in the capacity retention ratio after a charge-discharge cycle at a large current can be suppressed. Furthermore, since the state of charge of the negative active material is 0.6 or less, the state of charge of the negative active material does not become significantly large while achieving the increase in the energy density. Therefore, it is presumed that even when a charge-discharge cycle is performed at a large current, the side reaction with the nonaqueous electrolyte is reduced, and the decrease in the capacity retention ratio can be suppressed. Therefore, the energy storage device has a high energy density and is capable of suppressing the decrease in the capacity retention ratio after a charge-discharge cycle at a large current. The "large current" means, for example, 5 C or more.

The "graphite" refers to a carbon material in which an average grid spacing ($d_{002}$) of a (002) plane determined by X-ray diffraction before charge-discharge or in a discharged state is 0.33 nm or more and less than 0.34 nm. Herein, the "discharged state" means a state discharged such that lithium ions that can be occluded and released in association with charge-discharge are sufficiently released from the carbon material as the negative active material. For example, the "discharged state" refers to a state where the open circuit voltage is 0.7 V or higher in a half cell that has, for use as a working electrode, a negative electrode containing a carbon material as a negative active material, and has metal Li for use as a counter electrode. The "natural graphite" is a generic term for graphite obtained from natural minerals.

The "internal porosity in the natural graphite particles" means the area ratio [%] of voids in the particles with respect to the area of the entire natural graphite particles in the cross section of the natural graphite particles observed in a SEM image acquired using a scanning electron microscope (SEM). The internal porosity is determined by the following procedure.

(1) Preparation of sample for measurement

The negative electrode to be measured is fixed with a thermosetting resin. Cross Section Polisher (registered trademark, manufactured by JEOL Ltd.) is used to expose the cross section of the negative electrode fixed with the resin according to an ion milling method to fabricate a sample for measurement. It is to be noted that the negative electrode to be measured is prepared in accordance with the following procedure. When the positive electrode and the negative electrode before assembling the energy storage device can be prepared, the positive electrode and the negative electrode are used as they are. In the case of preparing from the assembled energy storage device, first, the energy storage device is subjected to constant current discharge at a current of 0.1 C to a lower limit voltage under normal usage, into a discharged state. The energy storage device in the discharged state is disassembled. The negative electrode is taken out, and components (electrolyte or the like) adhering to the negative electrode are then sufficiently washed with dimethyl carbonate. The negative electrode is then dried under reduced pressure at room temperature. The operations from the disassembly of the energy storage device to the preparation of the negative electrode to be measured are performed in a dry air atmosphere at a dew point of -40°C or lower. Here, the "under normal usage" means use of the energy storage device while employing charge-discharge conditions recommended or specified in the energy storage device.

(2) Acquisition of SEM image

For acquiring a SEM image (cross-sectional SEM image), JSM-7001F (manufactured by JEOL Ltd.) is used as a scanning electron microscope. For the SEM image, a secondary electron image is observed. The acceleration voltage is 15 kV The observation magnification is set such that the number of graphite particles appearing in one field of view is three or more and fifteen or less. The obtained SEM image is stored as an image file. In addition, various conditions such as spot diameter, working distance, irradiation current, luminance, and focus are appropriately set so as to make the contour of the graphite particle clear.

(3) Cut-out of contour of graphite particle

The contour of the graphite particle is cut out from the acquired SEM image by using an image cutting function of an image editing software Adobe Photoshop Elements 11. The contour is cut out by using a quick selection tool to select the outside of the contour of the graphite particle and edit the part excluding the graphite particle to a black background. At this time, when the number of the graphite particles from which the contours have been able to be cut out is less than three, the SEM image is acquired again, and the cutout is performed until the number of the graphite particles from which the contours have been able to be cut out becomes three or more.

(4) Binarization processing

The image of the first graphite particle among the cut-out graphite particles is subjected to binarization processing with, as a threshold value, a concentration set to be 20% lower than the concentration at which the intensity reaches the maximum, with the use of image analysis software PopImaging 6.00. By the binarization processing, the area on the higher-concentration side is calculated as a "void area S 1 in the particles".
Then, the image of the same first graphite particle is subjected to binarization processing with a concentration of 10% as a threshold value. The outer edge of the graphite particle is determined by the binarization processing, and the area inside the outer edge is calculated as an "area S0 of the whole particle".
The ratio of S1 to S0 (S1/S0) is calculated with the use of S1 and S0 calculated above to calculate a "void area ratio R1 in the particle to the area of the whole particle" in the first graphite particle.
The images of the second and subsequent graphite particles among the cut-out graphite particles are also each subjected to the binarization processing mentioned above, and the areas S1 and S0 are calculated. Based on the calculated area S1 and area S0, void area ratios R2, R3,... of the respective graphite particles are calculated.

(5) Calculation of internal porosity

The average value of all of the area ratios R1, R2, R3,... of voids of the graphite particles calculated by the binarization processing is calculated to determine the "internal porosity". It is to be noted that, instead of the scanning electron microscope used for "the acquisition of the SEM image", the image editing software used for "the cut-out of the contours of the graphite particles", and the image analysis software used for the "binarization processing", apparatuses, software, and the like capable of the corresponding measurement, image editing, and image analysis may be used.
Herein, the "charged state" of the energy storage device refers to a state where the energy storage device is charged with electricity until reaching a rated upper limit voltage for securing a rated capacity determined by design in advance. In a case where the rated capacity is not clear, the "charged state" refers to a state, wherein when charging the energy storage device with electricity using a charge control apparatus adopted by the energy storage device, the energy storage device is charged with electricity to the end-of-charge voltage when the charge operation is controlled to be stopped. For example, a state where the energy storage device is subjected to constant current charge with a current of 1/3 C until reaching the rated upper limit voltage or the end-of-charge voltage, and then subjected to constant voltage charge until the current reaches 0.01 C with the rated upper limit voltage or the end-of-charge voltage is a typical example of the "charge state" referred to herein. The "state of charge of the negative electrode material in the charged state" refers to the proportion of an amount of charge per mass of the negative active material in a charge state to a theoretical capacity per mass of the negative active material. The "theoretical capacity" refers to the maximum amount of electricity that can be stored by an active material per unit mass in an assumed electrochemical reaction. In the present specification, when the negative active material is natural graphite particles, the theoretical capacity is 372 mAh/g.

The amount of charge per mass of the negative active material in the charge state is measured by the following procedure. Herein, it is to be noted that a reductive reaction of the negative active material occluding lithium ions and the like is referred to as "charge", whereas an oxidative reaction of releasing lithium ions and the like from the negative active material is referred to as "discharge".

(1) The target energy storage device is discharged at a constant current to a lower limit voltage in normal use at a current of 0.1 C to be brought into a discharged state, and then disassembled in a glove box controlled to an argon atmosphere having an oxygen concentration of 5 ppm or less.
(2) In the glove box, the positive electrode and the negative electrode are taken out, and a small pouch cell (I) is assembled.
(3) After the small pouch cell (I) is charged with electricity to the charged state, constant current discharge is performed at a current of 0.01 C up to the lower limit voltage at which the rated capacity is obtained by the energy storage device. Then, constant voltage discharge is performed at the lower limit voltage. With regard to the discharge termination conditions, discharge was performed until the discharge current reached 0.001 C.
(4) In the glove box controlled to an argon atmosphere having an oxygen concentration of 5 ppm or less, the small pouch cell (I) is disassembled. The negative electrode is taken out, and a small pouch cell (II) in which lithium metal is disposed as a counter electrode is assembled.
(5) Additional discharge is performed at a current of 0.01 C until the voltage of the small pouch cell (II) reaches 2.0 V, and the negative electrode is adjusted to a discharged state.
(6) The total of discharge capacities in the above (3) and (5) is divided by the mass of a negative active material of a positive and negative electrode facing portion in the small pouch cell (I) to obtain an amount of charge per mass of the negative active material in the charged state.

The porosity of the negative active material layer is preferably 40% or more. In the energy storage device, the porosity of the negative active material layer is 40% or more, and therefore a sufficient conductive path is formed in the negative active material layer, so that the capacity retention ratio of the energy storage device after a charge-discharge cycle at a large current can be further increased.

The "porosity [%]" of the negative active material layer is a value calculated by the following formula (1).

$$\text{Porosity} = \{1\text{-}(\text{apparent density of negative active material layer/true density of negative active material layer})\} \times 100 \ ... \ (1)$$

The "apparent density of the negative active material layer" $(g/cm^3)$ is a value calculated from the mass per area of the negative active material layer and the average thickness of the negative active material layer. The average thickness of the negative active material layer is regarded as the average value of thicknesses measured at any five points. The "true density of the negative active material layer" $(g/cm^3)$ is calculated from the value of the true density of each constituent component contained in the negative active material layer and the mass ratio of constituent components.

The state of charge of the negative active material in a charged state is preferably 0.45 or more. By setting the state of charge of the negative active material in the charged state to 0.45 or more, the power retention ratio of the energy storage device after a charge-discharge cycle at a large current can be increased.

The average particle size of the natural graphite particles is preferably 7 pm or more. By using the natural graphite particles having such an average particle size, the power retention ratio of the energy storage device after a charge-discharge cycle at a large current can be further increased.

The BET specific surface area of the natural graphite particles is preferably 4.5 $m^2$/g or less. By using the natural graphite particles having such a BET specific surface area, the power retention ratio of the energy storage device after a charge-discharge cycle at a large current can be further increased.

The energy storage device is preferably used for a power source for a hybrid vehicle and a plug-in hybrid vehicle. The energy storage device has a high energy density and is capable of suppressing a decrease in a capacity retention ratio after a charge-discharge cycle at a large current, and thus is useful as an energy storage device used for a power source for a hybrid vehicle and a plug-in hybrid vehicle.

Hereinafter, an energy storage device according to an embodiment of the present invention, a configuration of an energy storage apparatus, a method for producing the energy storage device, and other embodiments will be described in detail. It is to be noted that the names of the respective constituent members (respective constituent elements) for use in the respective embodiments may be different from the names of the respective constituent members (respective elements) for use in the background art.

<Energy storage device>

An energy storage device according to an embodiment of the present invention includes: an electrode assembly including a positive electrode, a negative electrode, and a separator; a nonaqueous electrolyte; and a case that houses the electrode assembly and the nonaqueous electrolyte. The electrode assembly is usually a stacked type in which a plurality of positive electrodes and a plurality of negative electrodes are stacked with a separator interposed therebetween, or a wound type in which a positive electrode and a negative electrode are wound in a state of being stacked with a separator interposed therebetween. The nonaqueous electrolyte is present with the positive electrode, negative electrode, and separator impregnated with the nonaqueous electrolyte. A nonaqueous electrolyte secondary battery (hereinafter, also referred to simply as "secondary battery") will be described as an example of the energy storage device.

(Negative electrode)

The negative electrode includes a negative substrate and a negative active material layer disposed directly on the negative substrate or over the negative substrate with an intermediate layer interposed therebetween.

The negative substrate has conductivity. Whether the negative substrate has "conductivity" or not is determined with the volume resistivity of $10^7$ $\Omega$ cm measured in accordance with JIS-H-0505 (1975) as a threshold. As the material for the negative substrate, a metal such as copper, nickel, stainless steel, or nickel-plated steel, or an alloy thereof, a carbonaceous material, or the like is used. Among these metals and alloys, the copper or copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include rolled copper foils and electrolytic copper foils.

The average thickness of the negative substrate is preferably 2 pm or more and 35 pm or less, more preferably 3 pm or more and 30 pm or less, still more preferably 4 pm or more and 25 pm or less, and particularly preferably 5 pm or more and 20 pm or less. When the average thickness of the negative substrate is within the above range, it is possible to enhance the energy density per volume of a secondary battery while increasing the strength of the negative substrate.

The intermediate layer is a layer disposed between the negative substrate and the negative active material layer. The intermediate layer contains a conductive agent such as carbon particles, thereby reducing contact resistance between the negative substrate and the negative active material layer. The configuration of the intermediate layer is not particularly limited, and contains, for example, a binder and a conductive agent.

The negative active material layer contains a negative active material. The negative active material layer contains optional components such as a conductive agent, a binder, a thickener, and a filler, if necessary.

The negative active material layer may contain typical nonmetal elements such as B, N, P, F, Cl, Br, and I, typical metal elements such as Li, Na, Mg, Al, K, Ca, Zn, Ga, Ge, Sn, Sr, and Ba, or transition metal elements such as Sc, Ti, V, Cr, Mn, Fe, Co, Ni, Cu, Mo, Zr, Ta, Hf, Nb, and W as a component other than the negative active material, the conductive agent, the binder, the thickener, and the filler.

The negative active material contains natural graphite particles. The negative active material contains natural graphite particles, whereby the capacity retention ratio of the energy storage device after a charge-discharge cycle at a large current can be increased. The natural graphite is a generic term for graphite obtained from natural resources. The shape of the natural graphite particles is not particularly limited, and examples thereof include scale-like graphite, massive graphite (flake graphite), and earthy graphite. The natural graphite particles may be spheroidized natural graphite particles obtained by spheroidizing scale-like natural graphite or the like. The natural graphite may have four peaks appearing at diffraction angles $2\theta$ in a range from 40° to 50° in an X-ray diffraction pattern obtained with the use of CuK$\alpha$, measured before charge-discharge or in a discharged state. These four peaks are considered to be two peaks derived from a hexagonal structure and two peaks derived from a rhombohedral structure.

The upper limit of the internal porosity of the natural graphite particles is 2%, and preferably 1% (for example, 0.6%). When the internal porosity of the natural graphite particles is equal to or less than the above upper limit, the capacity of the energy storage device can be increased. The lower limit of the internal porosity is not particularly limited, and may be 0%, 0.1%, or 0.2% (for example, 0.3%). The technique disclosed herein can be preferably performed, for example, in an aspect in which the internal porosity of the natural graphite particles is 0.1% or more and 2% or less (for example, 0.2% or more and 1% or less). The internal porosity of the natural graphite particles may be equal to or more than any of the above lower limits and equal to or less than any of the above upper limits.

The average particle size of the natural graphite particles is, for example, preferably 1 pm or more and 100 pm or less, more preferably 3 pm or more and 50 pm or less, still more preferably 5 pm or more and 30 pm or less, particularly preferably 7 pm or more (for example, 7 pm or more and 25 pm or less), and still more preferably 20 pm or less or 10 pm or less. In some aspects, the average particle size of the natural graphite particles may be 8.5 pm or more, or 10 pm or more. By setting the average particle size of the natural graphite particles to be equal to or more than the above lower limit, the production or handling of the natural graphite particles is facilitated, and the power retention ratio of the energy storage device after a charge-discharge cycle at a large current is improved. By setting the average particle size of the natural graphite particles to be equal to or less than the above upper limit, the electron conductivity of the negative active material layer is improved. The average particle size of the natural graphite particles may be equal to or more than any of the above lower limits and equal to or less than any of the above upper limits. The "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

In order to obtain natural graphite particles having a predetermined particle size, a pulverizer, or a classifier or the like is used. Examples of a crushing method include a method in which a mortar, a ball mill, a sand mill, a vibratory ball mill, a planetary ball mill, a jet mill, a counter jet mill, a whirling airflow type jet mill, or a sieve or the like is used. At the time of crushing, wet-type crushing in coexistence of water or an organic solvent such as hexane can also be used. As a classification method, a sieve or a wind force classifier or the like is used based on the necessity both in dry manner and in wet manner.

The BET specific surface area of the natural graphite particles is not particularly limited, but is appropriately set to about 10 m$^2$/g or less. The BET specific surface area of the natural graphite particles is preferably 8 m$^2$/g or less, more preferably 6 m$^2$/g or less, and still more preferably 4.5 m$^2$/g or less, from the viewpoint of increasing the power retention ratio of the energy storage device after a charge-discharge cycle at a large current. The BET specific surface area of the natural graphite particles is appropriately set to about 0.5 m$^2$/g or more, preferably 1 m$^2$/g or more, and more preferably 1.5 m$^2$/g or more (for example, 2 m$^2$/g or more, or 2.5 m$^2$/g or more), from the viewpoint of increasing the power of the energy storage device. The technique disclosed herein can be preferably performed, for example, in an aspect in which the BET specific surface area of the natural graphite particles is 0.5 m$^2$/g or more and 10 m$^2$/g or less (for example, 1 m$^2$/g or more and 4.5 m$^2$/g or less). The BET specific surface area of the natural graphite particles may be equal to or more than any of the above lower limits and equal to or less than any of the above upper limits. The "BET specific surface area" means a specific surface area determined by a BET method. Specifically, the specific surface area is determined by a nitrogen adsorption method using "TiStar 3000" manufactured by Micromeritics as a measuring apparatus. As a specific measurement method, a multipoint method (5-point plot) is adopted, and the specific surface area is measured by performing measurement in a relative vapor pressure (P/P$_0$) range of 0.05 or more and 0.2 or less. Before the measurement of the specific surface area, the sample is held in a nitrogen flow environment at 150°C for 1 hour and dried.

Suitable examples of the natural graphite particles disclosed herein include those having an average particle size of 1 pm or more and 100 pm or less and a BET specific surface area of 0.5 m$^2$/g or more and 10 m$^2$/g or less; those having an average particle diameter of 6 pm or more and 20 pm or less and a BET specific surface area of 1 m$^2$/g or more and 6 m$^2$/g or less; those having an average particle diameter of 6 pm or more and 18 pm or less and a BET specific surface area of 1 m$^2$/g or more and 4.5 m$^2$/g or less; those having an average particle diameter of 7 pm or more and 18 pm or less and a BET specific surface area of 1 m$^2$/g or more and 4.5 m$^2$/g or less; and those having an average particle diameter of 10 pm or more and 15 pm or less and a BET specific surface area of 1 m$^2$/g or more and 4.5 m$^2$/g or less.

The aspect ratio of the natural graphite particles is preferably 1 or more and 5 or less, more preferably 1.5 or more and 4 or less, and still more preferably 2 or more and 3 or less. When the aspect ratio of the natural graphite particles is in the above range, the capacity retention ratio of the energy storage device after a charge-discharge cycle at a large current can be further increased, and the direct-current resistance can be further reduced. Herein, the "aspect ratio" means a ratio A/B of a longest diameter A of a particle to a longest diameter B in a direction perpendicular to the diameter A in the cross section of the particle observed in a SEM image acquired using a SEM. The SEM image when the aspect ratio is obtained can be obtained by the same method as in the case of obtaining the area ratio (porosity) of voids in the particle with respect to the area of the entire particle in the graphite particle described above.

The content of the natural graphite particles in the negative active material layer is preferably 60% by mass or more and 99% by mass or less, more preferably 90% by mass or more and 98% by mass or less, and may be still more preferably 95% by mass or more. By setting the content of the natural graphite particles in the above range, both an increase in the energy density and productivity of the negative active material layer can be achieved, and the capacity retention ratio of the energy storage device after a charge-discharge cycle at a large current can be further increased.

The negative active material may contain other negative active materials besides the natural graphite particles.

Examples of the other negative active materials include: metal Li; metals or metalloids such as Si and Sn; metal oxides or metalloid oxides such as oxides of Si, oxides of Ti, and oxides of Sn; titanium-containing oxides such as $Li_4Ti_5O_{12}$, $LiTiO_2$, and $TiNb_2O_7$; polyphosphoric acid compounds; silicon carbides; and carbon materials such as graphite other than natural graphite particles (artificial graphite) and non-graphitic carbon (easily graphitizable carbon or hardly graphitizable carbon). However, the content ratio of the natural graphite particles in the entire negative active material is preferably 80% by mass or more, more preferably 90% by mass or more, still more preferably 99% by mass or more, yet still more preferably 99.9% by mass, and particularly preferably 100% by mass. As described above, when the negative active material is substantially composed only of natural graphite particles, the capacity retention ratio of the energy storage device after a charge-discharge cycle at a large current can be further increased.

The "non-graphitic carbon" refers to a carbon material in which the average grid spacing ($d_{002}$) of the (002) plane determined by X-ray diffraction before charge-discharge or in the discharged state is 0.34 nm or more and 0.42 nm or less. Examples of the non-graphitic carbon include hardly graphitizable carbon and easily graphitizable carbon. Examples of the non-graphitic carbon include a resin-derived material, a petroleum pitch or a material derived from petroleum pitch, a petroleum coke or a material derived from petroleum coke, a plant-derived material, and an alcohol derived material.

The "hardly graphitizable carbon" refers to a carbon material in which the $d_{002}$ is 0.36 nm or more and 0.42 nm or less.

The "easily graphitizable carbon" refers to a carbon material in which the $d_{002}$ is 0.34 nm or more and less than 0.36 nm.

The content of the negative active material in the negative active material layer is preferably 60% by mass or more and 99% by mass or less, more preferably 90% by mass or more and 98% by mass or less, and may be still more preferably 95% by mass or more. The content of the negative active material falls within the range mentioned above, thereby allowing both an increase in the energy density and productivity of the negative active material layer to be achieved.

The upper limit of the state of charge of the negative active material is 0.6 (for example, 0.58), and preferably 0.55. Meanwhile, the lower limit of the state of charge of the negative active material is preferably 0.4, and more preferably 0.45. The technique disclosed herein can be preferably performed, for example, in an aspect in which the state of charge of the negative active material is 0.4 or more and 0.6 or less (further 0.45 or more and 0.6 or less). When the state of charge of the negative active material is equal to or more than the lower limit, the power retention ratio of the energy storage device after a charge-discharge cycle at a large current can be increased. When the state of charge of the negative active material is equal to or less than the upper limit or equal to or more than the lower limit, both an increase in the energy density of the energy storage device and an effect of suppressing a decrease in a capacity retention ratio after a charge-discharge cycle at a large current can be achieved at a higher level. The state of charge of the negative electrode active material may be equal to or more than any of the above lower limits and equal to or less than any of the above upper limits.

The conductive agent is not particularly limited as long as the agent is a material having conductivity. The carbon materials such as graphite and non-graphitic carbon also have conductivity, but are not contained in the conductive agent in the negative active material layer. Examples of the conductive agent other than the carbon material include other carbonaceous materials, metals, and conductive ceramics. Examples of the other carbonaceous materials include other non-graphite carbon and graphene-based carbon. Examples of the other non-graphite carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used alone, or two or more thereof may be used in mixture. In addition, these materials may be used in combination. For example, a composite material of carbon black and CNT may be used. Among these materials, carbon black is preferable from the viewpoints of electron conductivity and coatability, and in particular, acetylene black is preferable.

When the conductive agent is contained in the negative active material layer, the content of the conductive agent in the negative active material layer is preferably 1% by mass or more and 10% by mass or less, and more preferably 3% by mass or more and 9% by mass or less. By setting the content of the conductive agent in the above range, the energy density of the secondary battery can be enhanced. In the negative electrode in the energy storage device, the negative active material layer contains natural graphite particles having good electron conductivity, so that a sufficient conductive path is secured by the natural graphite particles. Therefore, the negative electrode in the energy storage device can exhibit good performance as the negative electrode even when the content of the conductive agent in the negative active material layer is small or the conductive agent is not contained. When the negative active material layer does not contain the conductive agent, the content of the negative active material can be increased, so that the energy density of the negative active material layer can be increased.

Examples of the binder include: thermoplastic resins such as fluororesins (e.g., polytetrafluoroethylene (PTFE), polyvinylidene fluoride (PVDF)), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the negative active material layer is preferably 1% by mass or more and 10% by mass or less, and more preferably 3% by mass or more and 9% by mass or less. The content of the binder falls within the range mentioned above, thereby allowing the negative active material to be stably held.

Examples of the thickener include polysaccharide polymers such as a carboxymethylcellulose (CMC) and a methylcellulose. When the thickener mentioned above has a functional group that is reactive with lithium and the like, the functional group may be deactivated by methylation or the like in advance.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof.

The lower limit of the porosity of the negative active material layer is preferably 40%, and more preferably 45%. The upper limit of the porosity is preferably 55%, and more preferably 50%. By setting the porosity to be equal to or more than the above lower limit, a sufficient surface area is secured in the negative active material layer, and a decrease in the capacity retention ratio after a charge-discharge cycle at a large current can be further suppressed. Meanwhile, by setting the porosity to be equal to or less than the above upper limit, a decrease in the power retention ratio after a charge-discharge cycle at a large current can be suppressed. The porosity of the negative active material layer may be equal to or more than any of the above lower limits and equal to or less than any of the above upper limits.

(Positive electrode)

The positive electrode includes a positive substrate and a positive active material layer disposed directly on the positive substrate or over the positive substrate with an intermediate layer interposed therebetween. The configuration of the intermediate layer is not particularly limited, and for example, can be selected from the configurations exemplified for the negative electrode.

The positive substrate has conductivity. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, and A1N30 specified in JIS-H-4000 (2014) or JIS-H-4160 (2006).

The average thickness of the positive substrate is preferably 3 pm or more and 50 pm or less, more preferably 5 pm or more and 40 pm or less, still more preferably 8 pm or more and 30 pm or less, and particularly preferably 10 pm or more and 25 pm or less. By setting the average thickness of the positive substrate to the above range, it is possible to increase the energy density per volume of a secondary battery while increasing the strength of the positive substrate.

The positive active material layer contains a positive active material. The positive active material layer contains optional components such as a conductive agent, a binder, a thickener, and a filler and the like as necessary. The optional components such as a conductive agent, a binder, a thickener, and a filler can be selected from the materials exemplified for the negative electrode. The carbon materials such as graphite and non-graphitic carbon are also contained in the conductive agent in the negative active material layer.

The positive active material can be appropriately selected from known positive active materials. As the positive active material for a lithium ion secondary battery, a material capable of occluding and releasing lithium ions is typically used. Examples of the positive active material include lithium-transition metal composite oxides that have an $\alpha$-NaFeO$_2$-type crystal structure, lithium-transition metal composite oxides that have a spinel-type crystal structure, polyanion compounds, chalcogenides, and sulfur. Examples of the lithium-transition metal composite oxides that have an $\alpha$-NaFeO$_2$-type crystal structure include Li[Li$_x$Ni$_{(1-x)}$]O$_2$ ($0 \leq x < 0.5$), Li[Li$_x$Ni$_\gamma$Co$_{(1-x-\gamma)}$]O$_2$ ($0 \leq x < 0.5$, $0 < \gamma < 1$), Li[Li$_x$Co$_{(1-x)}$]O$_2$ ($0 \leq x < 0.5$), Li[Li$_x$Ni$_\gamma$Mn$_{(1-x-\gamma)}$]O$_2$ ($0 \leq x < 0.5$, $0 < \gamma < 1$), Li[Li$_x$Ni$_\gamma$Mn$_ß$Co$_{(1-x-\gamma-ß)}$]O$_2$ ($0 \leq x < 0.5$, $0 < \gamma$, $0 < ß$, $0.5 < \gamma + ß < 1$), and Li[Li$_x$Ni$_\gamma$Co$_ß$Al$_{(1-x-\gamma-ß)}$]O$_2$ ($0 \leq x < 0.5$, $0 < \gamma$, $0 < ß$, $0.5 < \gamma + ß < 1$). Examples of the lithium-transition metal composite oxides that have a spinel-type crystal structure include Li$_x$Mn$_2$O$_4$ and Li$_x$Ni$_\gamma$Mn$_{(2-\gamma)}$O$_4$. Examples of the polyanion compounds include LiFePO$_4$, LiMnPO$_4$, LiNiPO$_4$, LiCoPO$_4$, Li$_3$V$_2$(PO$_4$)$_3$, Li$_2$MnSiO$_4$, and Li$_2$CoPO$_4$F. Examples of the chalcogenides include a titanium disulfide, a molybdenum disulfide, and a molybdenum dioxide. Some of atoms or polyanions in these materials may be substituted with atoms or anion species composed of other elements.

The surfaces of these materials may be coated with other materials. In the positive active material layer, one of these materials may be used singly, or two or more thereof may be used in mixture.

The positive active material is usually a particle (powder). The positive active material particles may be primary particles, but are preferably secondary particles in which primary particles are aggregated. When the positive active material particles are secondary particles, the surface area (reaction area) per mass tends to increase, resulting an increase in the discharge capacity per mass. The average particle size of the positive active material is preferably 0.1 pm or more and 20 pm or less, for example. By setting the average particle size of the positive active material to be equal to or more than the lower limit mentioned above, the positive active material is easily produced or handled. By setting the average particle size of the positive active material to be equal to or less than the upper limit mentioned above, the electron conductivity of the positive active material layer is improved. It is to be noted that in the case of using a composite of the positive active material and another material, the average particle size of the composite is regarded as the average particle size of the positive active material.

A crusher or a classifier or the like is used in order to obtain a powder with a predetermined particle size. A crushing method and a classification method can be selected from, for example, the methods exemplified for the negative electrode.

The internal porosity of the positive active material particles contained in the positive active material layer is not particularly limited, but is preferably about 15% or more. By setting the internal porosity of the positive active material particles to 15% or more, the power performance of the energy storage device can be enhanced. Even when such positive active material particles having a large internal porosity are used, the capacity retention ratio of the energy storage device can be increased even after a charge-discharge cycle by using the positive active material particles in combination with natural graphite particles having an internal porosity of 2% or less and setting the state of charge of the negative active material to 0.6 or less. From the viewpoint of enhancing the power performance of the energy storage device and the like, the internal porosity of the positive active material particles is preferably 18% or more, and more preferably 20% or more. The upper limit of the internal porosity of the positive active material particles may be 40%, 35%, 30%, or 25%. The technique disclosed herein can be preferably carried out, for example, in an aspect in which the internal porosity of the positive active material particles is 15% or more and 40% or less (for example, 18% or more and 30% or less). The internal porosity of the positive active material particles may be equal to or more than any of the above lower limits and equal to or less than any of the above upper limits. The internal porosity of the positive active material particles is measured by a procedure in which the negative electrode is replaced with a positive electrode and the graphite particles are replaced with positive active material particles in the method for measuring the internal porosity of the natural graphite particles described above.

The content of the positive active material in the positive active material layer is preferably 50% by mass or more and 99% by mass or less, more preferably 70% by mass or more and 98% by mass or less, and still more preferably 80% by mass or more and 95% by mass or less. By setting the content of the positive active material in the above range, it is possible to achieve both an increase in the energy density and productivity of the positive active material layer.

The positive active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Nb, and W as a component other than the positive active material, the conductive agent, the binder, the thickener, and the filler.

(Separator)

The separator can be appropriately selected from known separators. As the separator, for example, a separator composed of only a substrate layer, a separator where a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, the porous resin film is preferable from the viewpoint of strength, and the nonwoven fabric is preferable from the viewpoint of liquid retaining property of the nonaqueous electrolyte. As the material for the substrate layer of the separator, for example, a polyolefin such as polyethylene or polypropylene is preferable from the viewpoint of shutdown function, and polyimide, aramid, or the like is preferable from the viewpoint of resistance to oxidative decomposition. As the substrate layer of the separator, a material obtained by combining these resins may be used.

The heat resistant particles contained in the heat resistant layer preferably have a mass loss of 5% or less in the case of temperature increase from room temperature to 500°C under the air atmosphere of 1 atm, and more preferably have a mass loss of 5% or less in the case of temperature increase from room temperature to 800°C. Examples of materials that have a mass loss equal to or less than a predetermined value include inorganic compounds. Examples of the inorganic compound include: oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compounds, simple substances or complexes of these substances may be used alone, or two or more thereof may be used in mixture. Among these inorganic compounds, silicon oxide, aluminum oxide, or aluminosilicate is preferable from the viewpoint of the safety of the energy storage device.

The porosity of the separator is preferably 80% by volume or less from the viewpoint of strength, and is preferably 20% by volume or more from the viewpoint of discharge performance. The "porosity" herein is a volume-based value, and means a value measured with a mercury porosimeter.

As the separator, a polymer gel composed of a polymer and a nonaqueous electrolyte may be used. Examples of the polymer include polyacrylonitrile, polyethylene oxide, polypropylene oxide, polymethyl methacrylate, polyvinyl acetate, polyvinylpyrrolidone, and polyvinylidene fluoride. The use of the polymer gel has the effect of suppressing liquid leakage. As the separator, the polymer gel may be used in combination with the porous resin film or the nonwoven fabric or the like as described above.

(Nonaqueous electrolyte)

The nonaqueous electrolyte can be appropriately selected from known nonaqueous electrolytes. For the nonaqueous electrolyte, a nonaqueous electrolyte solution may be used. The nonaqueous electrolyte solution contains a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, solvents in which some of hydrogen atoms contained in these compounds are substituted with halogen may be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these carbonates, EC is preferable.

Examples of the chain carbonates include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these carbonates, EMC is preferable.

As the nonaqueous solvent, it is preferable to use the cyclic carbonate or the chain carbonate, and it is more preferable to use the cyclic carbonate and the chain carbonate in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. When the cyclic carbonate and the chain carbonate are used in combination, the volume ratio of the cyclic carbonate to the chain carbonate (cyclic carbonate : chain carbonate) preferably falls within the range from 5 : 95 to 50 : 50, for example.

The electrolyte salt can be appropriately selected from known electrolyte salts. Examples of the electrolyte salt include a lithium salt, a sodium salt, a potassium salt, a magnesium salt, and an onium salt. Among these salts, the lithium salt is preferable.

Examples of the lithium salt include inorganic lithium salts such as $LiPF_6$, $LiPO_2F_2$, $LiBF_4$, $LiClO_4$, and $LiN(SO_2F)_2$, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as $LiSO_3CF_3$, $LiN(SO_2CF_3)_2$, $LiN(SO_2C_2F_5)_2$, $LiN(SO_2CF_3)(SO_2C_4F_9)$, $LiC(SO_2CF_3)_3$, and $LiC(SO_2C_2F_5)_3$. Among these salts, the inorganic lithium salts are preferable, and $LiPF_6$ is more preferable.

The content of the electrolyte salt in the nonaqueous electrolyte solution is, at 20°C under 1 atm, preferably 0.1 mol/dm$^3$ or more and 2.5 mol/dm$^3$ or less, more preferably 0.3 mol/dm$^3$ or more and 2.0 mol/dm$^3$ or less, still more preferably 0.5 mol/dm$^3$ or more and 1.7 mol/dm$^3$ or less, and particularly preferably 0.7 mol/dm$^3$ or more and 1.5 mol/dm$^3$ or less. The content of the electrolyte salt falls within the range mentioned above, thereby allowing the ionic conductivity of the nonaqueous electrolyte solution to be increased.

The nonaqueous electrolyte solution may contain an additive, besides the nonaqueous solvent and the electrolyte salt. Examples of the additive include halogenated carbonic acid esters such as fluoroethylene carbonate (FEC) and difluoroethylene carbonate (DFEC); oxalic acid salts such as lithium bis(oxalate)borate (LiBOB), lithium difluorooxalatoborate (LiFOB), and lithium bis(oxalate)difluorophosphate (LiFOP); imide salts such as lithium bis(fluorosulfonyl)imide (LiFSI); aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds, such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethylsulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. One of these additives may be used alone, or two or more thereof may be used in mixture.

The content of the additive contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to the total mass of the nonaqueous electrolyte solution. The content of the additive falls within the range mentioned, thereby making it possible to improve capacity retention performance or cycle performance after high-temperature storage, and to further improve safety.

For the nonaqueous electrolyte, a solid electrolyte may be used, or a nonaqueous electrolyte solution and a solid electrolyte may be used in combination.

The solid electrolyte can be selected from arbitrary materials with ionic conductivity, which are solid at normal temperature (for example, 15°C to 25°C), such as lithium, sodium, and calcium. Examples of the solid electrolyte include a sulfide solid electrolyte, an oxide solid electrolyte, an oxynitride solid electrolyte, a polymer solid electrolyte, and a gel polymer electrolyte.

Examples of the sulfide solid electrolyte include $Li_2S-P_2S_5$, $LiI-Li_2S-P_2S_5$, and $Li_{10}Ge-P_2S_{12}$ in the case of a lithium ion secondary battery.

<Configuration of energy storage apparatus>

The shape of the energy storage device according to the present embodiment is not particularly limited, and examples thereof include cylindrical batteries, prismatic batteries, flattened batteries, coin batteries and button batteries.

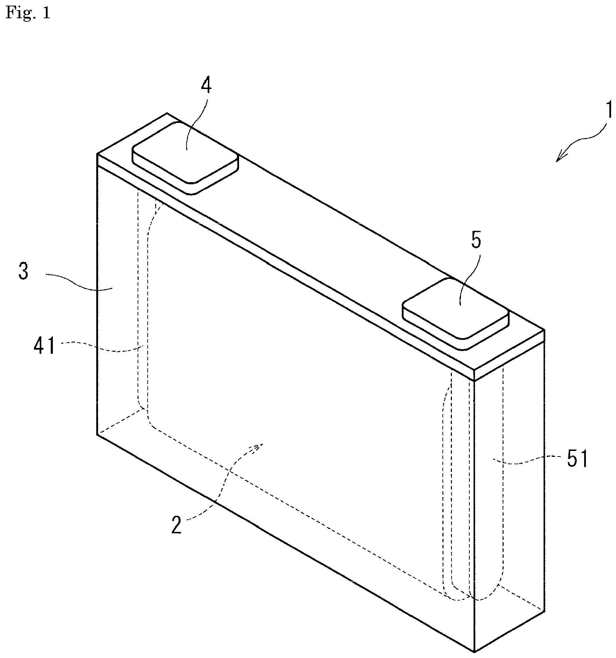

Fig. 1 illustrates an energy storage device 1 as an example of a prismatic battery. It is to be noted that Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

The energy storage device according to the present embodiment can be mounted as an energy storage unit (battery module) configured with a plurality of energy storage devices 1 assembled in applications in which charge and discharge are performed at a large current, for example, on power sources for automobiles such as electric vehicles (EV), hybrid vehicles (HEV), and plug-in hybrid vehicles (PHEV), and the like. In this case, the technique of the present invention may be applied to at least one energy storage device included in the energy storage unit. Preferable applications of the present invention include a large-size lithium ion secondary battery. Examples thereof include a large-size lithium ion secondary battery that is a large-capacity type battery with a battery capacity of 5.0 Ah or more (for example, 5.0 Ah or more and 100 Ah or less) and is assumed to be used in a charge-discharge cycle including discharge at a large current of 3 C or more (for example, from 5 C to 50 C). The energy storage device according to the present invention is suitable for the large-size lithium ion secondary battery mentioned above, because a decrease in a capacity retention ratio after a charge-discharge cycle at a large current is suppressed.

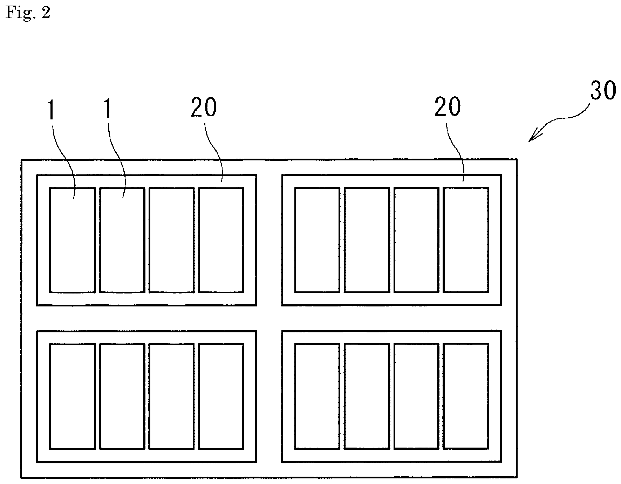

Fig. 2 illustrates an example of an energy storage apparatus 30 obtained by further assembling energy storage units 20 that each have two or more electrically connected energy storage devices 1 assembled. The energy storage apparatus 30 may include a busbar (not illustrated) for electrically connecting two or more energy storage devices 1, or a busbar (not illustrated) for electrically connecting two or more energy storage units 20, and the like. The energy storage unit 20 or the energy storage apparatus 30 may include a state monitor (not illustrated) that monitors the state of one or more energy storage devices 1.

<Method for producing energy storage device>

A method for producing the energy storage device according to the present embodiment can be appropriately selected from known methods. The producing method includes, for example, preparing an electrode assembly, preparing a nonaqueous electrolyte, and housing the electrode assembly and the nonaqueous electrolyte in a case. The preparation of the electrode assembly includes: preparing a positive electrode and a negative electrode, and forming an electrode assembly by stacking or winding the positive electrode and the negative electrode with a separator interposed therebetween.

The negative electrode of the energy storage device according to the present embodiment can be prepared, for example, by applying a negative composite paste containing the negative active material to a negative electrode substrate directly or with an intermediate layer interposed therebetween, followed by drying. After the drying, pressing or the like may be performed, if necessary. The negative composite paste contains components constituting the negative active material layer, such as a negative active material, and a conductive agent, a binder, and a thickener as optional components. The negative composite paste typically further contains a dispersion medium.

Housing the nonaqueous electrolyte in the case can be appropriately selected from known methods. For example, in the case of using a nonaqueous electrolyte solution for the nonaqueous electrolyte, the nonaqueous electrolyte may be injected from an inlet formed in the case, followed by sealing the inlet.

<Other embodiments>

It is to be noted that the energy storage device according to the present invention is not limited to the embodiment mentioned above, and various changes may be made without departing from the scope of the present invention. For example, to the configuration of one embodiment, the configuration of another embodiment can be added, and a part of the configuration of one embodiment can be replaced by the configuration of another embodiment or a well-known technique. Furthermore, a part of the configuration according to one embodiment can be deleted. In addition, a well-known technique can be added to the configuration according to one embodiment.

While the case where the energy storage device is used as a nonaqueous electrolyte secondary battery (for example, lithium ion secondary battery) that can be charged and discharged has been described in the embodiment mentioned above, the type, shape, size, and capacity and the like of the energy storage device are arbitrary. The present invention can also be applied to various secondary batteries, and capacitors such as electric double layer capacitors and lithium ion capacitors.

While the electrode assembly with the positive electrode and the negative electrode stacked with the separator interposed therebetween has been described in the embodiment mentioned above, the electrode assembly may include no separator. For example, the positive electrode and the negative electrode may be brought into direct contact with each other, with a non-conductive layer formed on the active material layer of the positive electrode or negative electrode.

EXAMPLES

Hereinafter, the present invention will be described more specifically with reference to Examples. The present invention is not limited to the following Examples.

The internal porosity of natural graphite particles and the porosity of a negative active material layer used in the following Examples and the like are values measured by the above-described method.

[Example 1]

(Fabrication of positive electrode)

A positive composite paste was prepared with the use of $LiNi_{1/3}Co_{1/3}Mn_{1/3}O_2$ as a positive active material, acetylene black (AB) as a conductive agent, polyvinylidene fluoride (PVDF) as a binder, and N-methylpyrrolidone (NMP) as a dispersion medium. The mass ratio of the positive electrode active material, AB, and PVDF was 90 : 5 : 5 in terms of solid content. The positive composite paste was applied to both surfaces of an aluminum foil as a positive substrate, and dried. Thereafter, roll pressing was performed to obtain a positive electrode.

(Fabrication of negative electrode)

Natural graphite particles A as a negative active material, a styrenebutadiene rubber (SBR) as a binder, carboxymethyl cellulose (CMC) as a thickener, and water as a dispersion medium were mixed to prepare a negative composite paste. The mass ratio of natural graphite particles A, SBR, and CMC was set to be 98 : 1 : 1 in terms of solid content. The negative composite paste was applied to both surface of a copper foil as a negative substrate, and dried. Thereafter, roll pressing was performed to obtain a negative electrode. The internal porosity of the natural graphite particles A calculated by the method described above was 0.49%, and the porosity of the negative active material layer was 45%.

The ratio of the mass of graphite per unit area in the negative active material layer to the mass of the positive active material per unit area in the positive active material layer was adjusted so that the state of charge of graphite in the charged state was 0.60.

(Nonaqueous electrolyte solution)

LiPF$_6$ was dissolved at a concentration of 1.2 mol/dm$^3$ in a solvent obtained by mixing ethylene carbonate, ethyl methyl carbonate, and dimethyl carbonate at a volume ratio of 30 : 35 : 35 to obtain a nonaqueous electrolyte solution.

(Separator)

A polyolefin microporous membrane was used for the separator.

(Assembly of energy storage device)

The positive electrode, the negative electrode, and the separator were used to obtain a wound electrode assembly. The electrode assembly was housed in a prismatic case, and a nonaqueous electrolyte solution was injected into the case to seal the case.

[Examples 2 to 5 and Comparative Example 1]

Energy storage devices according to Examples 2 to 5 and Comparative Example 1 were obtained in the same manner as in Example 1 except that the states of charge of the negative active materials were set as shown in Table 1.

[Comparative Examples 2 to 6]

Energy storage devices according to Comparative Examples 2 to 6 were obtained in the same manner as in Example 1 except that the negative active material was changed to natural graphite particles B and the state of charge was as shown in Table 1. The internal porosity of the natural graphite particles B calculated by the method described above was 4.44%.

[Example 6]

An energy storage device according to Example 6 was obtained in the same manner as in Example 1 except that the state of charge of the negative active material was set to 0.40 and the porosity of the negative active material layer was set to 38%.

[Comparative Example 7]

An energy storage device according to Comparative Example 7 was obtained in the same manner as in Example 6 except that natural graphite particles B were used as the negative active material and the internal porosity was set to 4.44%.

[Evaluation]

(Initial charge-discharge)

Each energy storage device obtained was subjected to constant current charge up to 4.1 V at a current of 1 C at 25°C, and then to constant voltage charge at 4.1 V With regard to the charge termination conditions, charge was performed until the current reached 0.05 C. After a pause time of 10 minutes, constant current discharge was performed to 3.0 V at a current of 1 C, and then a pause time of 10 minutes was provided. The charging and discharging steps constituted one cycle, and initial charge-discharge of two cycles was performed. The discharge capacity of the second cycle was defined as "initial discharge capacity".

(Capacity retention ratio after charge-discharge cycle)

Each energy storage device after the initial charge-discharge was stored in a thermostatic bath at 50°C for 4 hours, and then subjected to constant current charge at a current of 10 C to 4.0 V Thereafter, constant current discharge was performed at a current of 10 C to 3.5 V without any pause time. The charge and discharge constituted one cycle, and 5000 cycles were repeated. Thereafter, each energy storage device was stored in a thermostatic layer at 25°C for 4 hours, and then the discharge capacity was confirmed in the same manner as in the initial charge-discharge. Thus, the discharge capacity after charge-discharge of 5000 cycles was measured. The percentage of the discharge capacity after charge-discharge of 5000 cycles with respect to the initial discharge capacity was calculated, and regarded as "the capacity retention ratio after charge-discharge of 5000 cycles (%)".

The state of charge of the negative active material and the capacity retention ratio after charge-discharge of 5000 cycles [%] in each energy storage device are shown in the following Table 1.

[Table 1]

| | Negative active material | | | Negative active material layer | Evaluation |
|---|---|---|---|---|---|
| | Material | State of charge | Internal porosity [%] | Porosity [%] | Capacity retention ratio after charge-discharge of 5000 cycles [%] |
| Comparative Example 1 | Natural graphite A | 0.65 | 0.49 | 45 | 75 |
| Example 1 | Natural graphite A | 0.60 | 0.49 | 45 | 80 |
| Comparative Example 2 | Natural graphite B | 0.60 | 4.44 | 45 | 70 |
| Example 2 | Natural graphite A | 0.55 | 0.49 | 45 | 81 |
| Comparative Example 3 | Natural graphite B | 0.55 | 4.44 | 45 | 72 |
| Example 3 | Natural graphite A | 0.50 | 0.49 | 45 | 82 |
| Comparative Example 4 | Natural graphite B | 0.50 | 4.44 | 45 | 78 |
| Example 4 | Natural graphite A | 0.45 | 0.49 | 45 | 82 |
| Comparative Example 5 | Natural graphite B | 0.45 | 4.44 | 45 | 80 |
| Example 5 | Natural graphite A | 0.40 | 0.49 | 45 | 82 |
| Comparative Example 6 | Natural graphite B | 0.40 | 4.44 | 45 | 80 |
| Example 6 | Natural graphite A | 0.40 | 0.49 | 38 | 75 |
| Comparative Example 7 | Natural graphite B | 0.40 | 4.44 | 38 | 72 |

As shown in Table 1, Examples 1 to 6 containing natural graphite particles having an internal porosity of 2% or less and containing a negative active material having a state of charge in a charged state of 0.6 or less contained natural graphite particles having an internal porosity of more than 2%, and a decrease in a capacity retention ratio after a charge-discharge cycle at a large current was suppressed as compared with Comparative Examples 2 to 7 under the same other conditions. As shown in the results of Example 6 and Comparative Example 7, it is found that when the porosity of the negative active material layer is less than 40%, the capacity retention ratio is lower than that of Examples 1 to 5 and Comparative Examples 2 to 6 in which the porosity is 40% or more, but the effect of suppressing the decrease in the capacity retention ratio due to the internal porosity being 2% or less is obtained.

Meanwhile, from the results of Example 1 and Comparative Example 1, when the state of charge of the negative active material in the charged state was more than 0.6, the effect of suppressing the decrease in the capacity retention ratio was reduced even when natural graphite particles having an internal porosity of 2% or less were contained.

From the results, it was shown that in the energy storage device, natural graphite particles having an internal porosity of 2% or less are used as a negative active material, and the state of charge of the negative active material in a charged state is 0.6 or less, so that it is possible to suppress a decrease in a capacity retention ratio after a charge-discharge cycle at a large current. Therefore, it was shown that the energy storage device can achieve both an increase in an energy density and suppression of a decrease in a capacity retention ratio after a charge-discharge cycle at a large current at a high level.

Furthermore, in order to confirm the influence of the average particle size and the BET specific surface area of the natural graphite particles on the power retention ratio after a charge-discharge cycle at a large current of the energy storage device, the following test was performed.

[Examples 7 to 12]

Energy storage devices of Examples 7 to 12 were obtained in the same manner as in Example 1 except that a plurality of kinds of natural graphite particles having different average particle sizes and BET specific surface areas were used, and the state of charge of the negative active material was changed between 0.4 and 0.65. The internal porosity of the natural graphite particles in each example was 0.49%, and the porosity of the negative active material layer was 45%. The average particle size and the BET specific surface area of the natural graphite particles used in each example are shown in Table 2.

[Evaluation]

(1) Initial power

Each energy storage device obtained was subjected to constant current charge up to 4.1 V at a current of 1 C at 25°C, and then to constant voltage charge at 4.1 V With regard to the charge termination conditions, charge was performed until the current reached 0.05 C. After a pause time of 10 minutes, constant current discharge was performed to 3.0 V at a current of 1 C, and then a pause time of 10 minutes was provided. The charging and discharging steps constituted one cycle, and initial charge-discharge of two cycles was performed.

Each energy storage device after the initial charge-discharge was subjected to constant current charge at a current of 1 C at 25°C to set the SOC to 55%. Subsequently, the energy storage device was charged with electricity at a current of 2 C, 4 C, 6 C, 12 C, or 18 C for 10 seconds. After completion of each discharge, constant current discharge was performed at a current of 0.5 C to set the SOC to 55%. The relationship between the current at each discharge and the voltage at 1 second after the start of discharge was plotted, and direct-current resistance was determined from the slope of a straight line obtained from the plot of 5 points. Power after 1 second from the start of charge was calculated from the obtained direct-current resistance and used as initial power.

(2) Charge-discharge cycle test

Then, each energy storage device was subjected to constant current discharge at a current of 1 C to 3.0 V at 25°C, and paused for 10 minutes to set the SOC to 0%. Thereafter, constant current charge was performed at a current of 1 C to set the SOC to 20%. Subsequently, after storage in a thermostatic bath at 55°C for 4 hours, constant current charge was performed up to a voltage corresponding to SOC 80% at a current of 8 C, and then constant current discharge was performed up to a voltage corresponding to SOC 20% at a current of 8 C. The charge and discharge cycles were repeated for 250 hours without a pause time after the charge and discharge.

(3) Power after charge-discharge cycle test

Thereafter, the power after the charge-discharge cycle test was determined by the same procedure as the procedure for determining the initial power. For each energy storage device, the percentage of the power after the charge-discharge cycle test with respect to the initial power was obtained and taken as "power retention ratio [%]". The state of charge and the power retention ratio of the negative active material in each energy storage device are shown in Table 2. In Table 2, the power retention ratio [%] is shown in a double frame.

[Table 2]

| | Negative active material | | | | | | | |
|---|---|---|---|---|---|---|---|---|
| | Average particle size [um] | BET specific surface area [m²/g] | State of charge | | | | | |
| | | | 0.4 | 0.45 | 0.5 | 0.55 | 0.6 | 0.65 |
| Example 7 | 7 | 4.5 | 83 | 104 | 108 | 108 | 103 | 98 |
| Example 8 | 10 | 4.5 | 93 | 113 | 115 | 114 | 110 | 106 |
| Example 9 | 6 | 4.5 | 65 | 90 | 95 | 94 | 92 | 85 |
| Example 10 | 6 | 6 | 49 | 69 | 73 | 73 | 71 | 67 |
| Example 11 | 7 | 6 | 65 | 86 | 90 | 89 | 85 | 80 |
| Example 12 | 10 | 6 | 74 | 91 | 96 | 96 | 92 | 85 |

As shown in Table 2, regardless of the average particle size and the BET specific surface area of the natural graphite particles, when the state of charge of the negative active material was in a range of 0.45 to 0.6, the power retention ratio of the energy storage device after a charge-discharge cycle at a large current tended to increase. In particular, in the batteries of Examples 7 and 8 in which the average particle size of the natural graphite particles was 7 pm or more and the BET specific surface area was 4.5 m²/g or less, in the range of the state of charge of 0.45 to 0.6, a power retention ratio after a charge-discharge cycle at an extremely high large current of 103% or more could be achieved.

DESCRIPTION OF REFERENCE SIGNS

1    Energy storage device
2    Electrode assembly
3    Case
4    Positive electrode terminal
41   Positive electrode lead
5    Negative electrode terminal
51   Negative electrode lead
20   Energy storage unit
30   Energy storage apparatus

**Claims**

1. An energy storage device comprising:

    a negative electrode including a negative active material layer; and
    a nonaqueous electrolyte, wherein
    the negative active material layer contains a negative active material,
    the negative active material contains natural graphite particles,
    the natural graphite particles have an internal porosity of 2% or less, and
    a state of charge of the negative active material in a charged state is 0.6 or less.

2. The energy storage device according to claim 1, wherein the negative active material layer has a porosity of 40% or more.

3. The energy storage device according to claim 1 or 2, wherein the energy storage device is used for a power source for a hybrid vehicle and a plug-in hybrid vehicle.

4. The energy storage device according to claim 1 or 2, wherein the state of charge of the negative active material in the charged state is 0.45 or more.

**5.** The energy storage device according to claim 1 or 2, wherein the natural graphite particles have an average particle size of 7 pm or more.

**6.** The energy storage device according to claim 1 or 2, wherein the natural graphite particles have a BET specific surface area of 4.5 $m^2$/g or less.

Fig. 1

Fig. 2

## INTERNATIONAL SEARCH REPORT

| International application No. |
|---|
| **PCT/JP2022/027179** |

**A. CLASSIFICATION OF SUBJECT MATTER**

*H01M 10/052*(2010.01)i; *H01G 11/24*(2013.01)i; *H01G 11/26*(2013.01)i; *H01G 11/42*(2013.01)i; *H01M 4/133*(2010.01)i; *H01M 4/587*(2010.01)i

FI: H01M10/052; H01M4/587; H01M4/133; H01G11/26; H01G11/42; H01G11/24

According to International Patent Classification (IPC) or to both national classification and IPC

**B. FIELDS SEARCHED**

Minimum documentation searched (classification system followed by classification symbols)

H01M10/052; H01G11/24; H01G11/26; H01G11/42; H01M4/133; H01M4/587

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2003-115326 A (JAPAN STORAGE BATTERY CO LTD) 18 April 2003 (2003-04-18) claims, paragraphs [0004], [0010], [0013] | 1-6 |
| A | WO 2020/054708 A1 (GS YUASA INTERNATIONAL LTD.) 19 March 2020 (2020-03-19) paragraphs [0007], [0015], [0039] | 1-6 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **26 August 2022** | **06 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/027179**

| Patent document cited in search report | | | Publication date (day/month/year) | Patent family member(s) | | | Publication date (day/month/year) |
|---|---|---|---|---|---|---|---|
| JP | 2003-115326 | A | 18 April 2003 | (Family: none) | | | |
| WO | 2020/054708 | A1 | 19 March 2020 | US | 2021/0257618 | A1 | |
| | | | | paragraphs [0007], [0018], [0055] | | | |
| | | | | EP | 3836255 | A1 | |
| | | | | CN | 112673492 | A | |

Form PCT/ISA/210 (patent family annex) (January 2015)

**EP 4 343 910 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005222933 A